# EUROPÄISCHE PATENTSCHRIFT

(11) **EP 4 141 227 B1**
(45) Veröffentlichungstag und Bekanntmachung des Hinweises auf die Patenterteilung: **26.06.2024**
(21) Anmeldenummer: 22187404.3
(22) Anmeldetag: 28.07.2022
(51) Int. Cl.: F01N 3/20, H05B 3/24

(54) **ABGASHEIZER**
EXHAUST HEATER
ÉLÉMENT CHAUFFANT DE GAZ D'ÉCHAPPEMENT

(30) Priorität: 26.08.2021 DE 102021122083
(43) Veröffentlichungstag der Anmeldung: 01.03.2023
(73) Patentinhaber: Purem GmbH, 66539 Neunkirchen (DE)
(72) Erfinder: Häberle, Jürgen, Stuttgart (DE); Spieth, Arnulf, Hochdorf (DE); Hammer, Jochen, Stuttgart (DE); Frobenius, Fabian, Stuttgart (DE)
(74) Vertreter: Ruttensperger Lachnit Trossin Gomoll

(56) Entgegenhaltungen:
- EP-A1- 3 901 433
- JP-U- S6 078 918

## Beschreibung

Die vorliegende Erfindung betrifft einen Abgasheizer, mit welchem in einer Abgasanlage eines Kraftfahrzeugs Wärme auf das darin strömende, von einer Brennkraftmaschine ausgestoßene Abgas übertragen werden kann, um dadurch insbesondere in einer Startphase des Betriebs einer Brennkraftmaschine stromabwärts bezüglich des Abgasheizers angeordnete Systembereiche, wie zum Beispiel Katalysatoren oder Partikelfilter, schneller auf Betriebstemperatur zu bringen.

Aus der nachveröffentlichten deutschen Patentanmeldung DE 10 2021 109 568 ist ein Abgasheizer bekannt, bei welchem zwischen zwei aus Blechmaterial aufgebauten, im Wesentlichen plattenartigen Trägerelementen einer Trägeranordnung zwei durch Heraustrennen aus einem Flachmaterial bereitgestellte, im Wesentlichen plattenartig bzw. flächig ausgebildete Heizleiter einer Heizleiteranordnung in einer Abgas-Hauptströmungsrichtung aufeinander folgend angeordnet sind. Durch eine Mehrzahl von bolzenartig ausgebildeten Verbindungselementen ist der geschichtete Aufbau von Trägerelementen und dazwischen angeordneten Heizleitern zusammengehalten. Um eine elektrische Isolierung der Heizleiter bezüglich der Trägerelemente bzw. auch bezüglich einander zu erreichen, sind zwischen diesen jeweils mehrere Abstützelemente aus elektrisch isolierendem Material, beispielsweise Keramikmaterial, angeordnet.

Aus der EP 3 901 433 A1 ist ein Abgasheizer der unter Artikel 54(3) EPÜ fällt bekannt.

Ein mit kreisrundem Querschnitt ausgebildeter Heizleiter ist über eine Mehrzahl von Abstützelementen elektrisch isoliert bezüglich einer Trägeranordnung abgestützt. Angepasst an den kreisrunden Querschnitts des Heizleiters, weist jedes Abstützelement eine den Heizleiter direkt abstützende, konkav gewölbte Abstützfläche auf. Ein weiterer Abgasheizer ist aus JPS6078918U bekannt.

Es ist die Aufgabe der vorliegenden Erfindung, einen Abgasheizer bereitzustellen, bei welchem die im Bereich von Abstützelementen für Heizleiterelemente entstehende Belastung gemindert ist.

Erfindungsgemäß wird diese Aufgabe gelöst durch einen Abgasheizer für eine Abgasanlage einer Brennkraftmaschine, umfassend eine Trägeranordnung und eine an der Trägeranordnung getragene Heizleiteranordnung mit wenigstens einem stromdurchflossenen Heizleiter, wobei wenigstens ein Heizleiter bezüglich der Trägeranordnung durch wenigstens eine Trägeranordnung-Abstützeinheit elektrisch isoliert getragen ist, wobei wenigstens eine Trägeranordnung-Abstützeinheit wenigstens ein Trägeranordnung-Abstützelement mit einer gewölbten Abstützfläche umfasst.

Durch das Bereitstellen einer insbesondere konvex gewölbten bzw. balligen Abstützfläche wird eine nach Art einer Abrollbewegung erfolgende Relativbewegung zwischen der Trägeranordnung und der Heizleiteranordnung im Bereich der gegenseitigen Abstützung derselben ermöglicht, so dass zu Beschädigungen insbesondere einer Abstützeinheit führende Belastungen vermieden werden können.

Erfindungsgemäß ist dabei vorgesehen, dass wenigstens eine, vorzugsweise jede Trägeranordnung-Abstützeinheit ein erstes Trägeranordnung-Abstützelement mit einer konvex gewölbten ersten Abstützfläche und ein zweites Trägeranordnung-Abstützelement mit einer an der ersten Abstützfläche abgestützten, konkav gewölbten zweiten Abstützfläche umfasst. Dadurch wirken bei dem erfindungsgemäßen Aufbau eines Abgasheizers bei wenigstens einer, vorzugsweise jeder Trägeranordnung-Abstützeinheit die beiden Trägeranordnung-Abstützelemente mit ihren aneinander anliegenden, konkav bzw. konvex gewölbten Abstützflächen nach Art eines Kugelgelenks zusammen. Dies bedeutet, dass die durch die Trägeranordnung-Abstützelemente bezüglich einander abgestützten Komponenten des Abgasheizers lokal bezüglich einander verschwenken können, ohne dass an derart aufgebauten Trägeranordnung-Abstützelementen zu einer Beschädigung derselben führende übermäßige Belastungen auftreten.

Um eine stabile Abstützung bezüglich eines jeweiligen Heizleiters zu erreichen, kann bei wenigstens einer, vorzugsweise jeder Trägeranordnung-Abstützeinheit ein Trägeranordnung-Abstützelement eine im Wesentlichen ungekrümmte Heizleiter-Abstützfläche aufweisen. Es ist somit ein flächiger und die auftretenden Lasten gleichmäßig verteilender Kontakt vorgesehen, der deshalb nicht zu einer Überlastung führen kann, da an der jeweils anderen Seite die nach Art eines Kugelgelenks realisierte Zusammenwirkung mit dem jeweils anderen Trägeranordnung-Abstützelement vorgesehen ist.

Weiter kann für eine stabile Abstützung bezüglich der Trägeranordnung vorgesehen sein, dass bei wenigstens einer, vorzugsweise jeder Trägeranordnung-Abstützeinheit ein Trägeranordnung-Abstützelement eine im Wesentlichen ungekrümmte Trägeranordnung-Abstützfläche aufweist.

Um eine elektrische Isolierung zu gewährleisten, wird vorgeschlagen, dass bei wenigstens einer, vorzugsweise jeder Trägeranordnung-Abstützeinheit wenigstens ein, vorzugsweise jedes Trägeranordnung-Abstützelement mit elektrisch isolierendem Material, beispielsweise Keramikmaterial, aufgebaut ist.

Bei einem eine geringere Anzahl an Bauteilen benötigenden Aufbau kann bei wenigstens einer, vorzugsweise jeder Trägeranordnung-Abstützeinheit ein Trägeranordnung-Abstützelement durch die Trägeranordnung bereitgestellt sein.

Für eine stabile Halterung der Heizleiteranordnung an der Trägeranordnung kann die Trägeranordnung zwei die Heizleiteranordnung in Richtung einer im Wesentlichen einer Abgas-Hauptströmungsrichtung entsprechenden Abgasheizer-Längsachse zwischen sich aufnehmende Trägerelemente umfassen, wobei die Heizleiteranordnung bezüglich jedes Trägerelements vermittels wenigstens einer Trägeranordnung-Abstützeinheit abgestützt ist.

Die Integration einer Trägeranordnung-Abstützeinheit-Funktion in die Trägeranordnung kann dadurch erreicht werden, dass bei wenigstens einer, vorzugsweise jeder Trägeranordnung-Abstützeinheit ein Trägeranordnung-Abstützelement durch ein Trägerelement bereitgestellt ist.

Für einen effizienten Heizbetrieb kann bei dem erfindungsgemäßen Abgasheizer die Heizleiteranordnung wenigstens zwei in Richtung der Abgasheizer-Längsachse aufeinander folgend angeordnete Heizleiter umfassen, wobei ein erster der Heizleiter vermittels wenigstens einer Trägeranordnung-Abstützeinheit bezüglich eines der Trägerelemente abgestützt ist und ein zweiter der Heizleiter vermittels wenigstens einer Trägeranordnung-Abstützeinheit bezüglich des anderen der Trägerelemente abgestützt ist, und wobei zwischen einander in Richtung der Abgasheizer-Längsachse unmittelbar benachbarten Heizleitern wenigstens eine Heizleiter-Abstützeinheit angeordnet ist.

Um dabei eine stabile, elektrisch isolierende Abstützung einander unmittelbar benachbarter Heizleiter zu gewährleisten, wird vorgeschlagen, dass wenigstens eine, vorzugsweise jede Heizleiter-Abstützeinheit wenigstens ein mit elektrisch isolierendem Material aufgebautes Heizleiter-Abstützelement umfasst oder/und in Zuordnung zu jedem daran abgestürzten Heizleiter eine im Wesentlichen ebene Heizleiter-Abstützfläche umfasst.

Ein stabiler Zusammenhalt der Trägeranordnung mit der Heizleiteranordnung kann dadurch erreicht werden, dass die Heizleiteranordnung durch wenigstens ein Verbindungselement, vorzugsweise eine Mehrzahl von Verbindungselementen, mit der Trägeranordnung verbunden ist.

Dabei kann eine definierte Positionierung einer jeweiligen Trägeranordnung-Abstützeinheit dadurch unterstützt werden, dass wenigstens eine, vorzugsweise jede Trägeranordnung-Abstützeinheit von einem Verbindungselement durchsetzt ist.

Bei einer weiteren Ausgestaltung kann eine größere Freiheit in der Formgebung und auch der Positionierung einer jeweiligen Trägeranordnung-Abstützeinheit dadurch erreicht werden, dass wenigstens eine, vorzugsweise jede Trägeranordnung-Abstützeinheit nicht von einem Verbindungselement durchsetzt ist.

Es ist darauf hinzuweisen, dass eine entsprechende Ausgestaltung in der Positionierung bezüglich eines bzw. mehrerer Verbindungselemente auch bei einer jeweiligen Heizleiter-Abstützeinheit realisiert sein kann.

Die Erfindung betrifft ferner eine Abgasanlage für eine Brennkraftmaschine mit wenigstens einem Abgasheizer mit erfindungsgemäßem Aufbau

Die vorliegende Erfindung wird nachfolgend mit Bezug auf die beiliegenden Figuren detailliert beschrieben. Es zeigt:
- Fig. 1: eine perspektivische Ansicht eines Abgasheizers;
- Fig. 2: eine Längsschnittansicht des Abgasheizers der Fig. 1;
- Fig. 3: in einen Längsschnitt eines Abgasheizers mit in Zuordnung zu einem Verbindungselement angeordneten Trägeranordnung-Abstützeinheiten in prinzipartiger Darstellung;
- Fig. 4: eine der Fig. 3 entsprechende Darstellung einer alternativen Ausgestaltungsart;
- Fig. 5: eine weitere der Fig. 3 entsprechende Darstellung einer alternativen Ausgestaltungsart;
- Fig. 6: eine Längsschnittansicht eines Abgasheizers mit zwischen zwei Verbindungselementen angeordneten Trägeranordnung-Abstützeinheiten
- Fig. 7: einen Ausschnitt eines Abgasheizers mit einer nicht erfindungsgemäßen Ausgestaltungsart einer Trägeranordnung-Abstützeinheit.

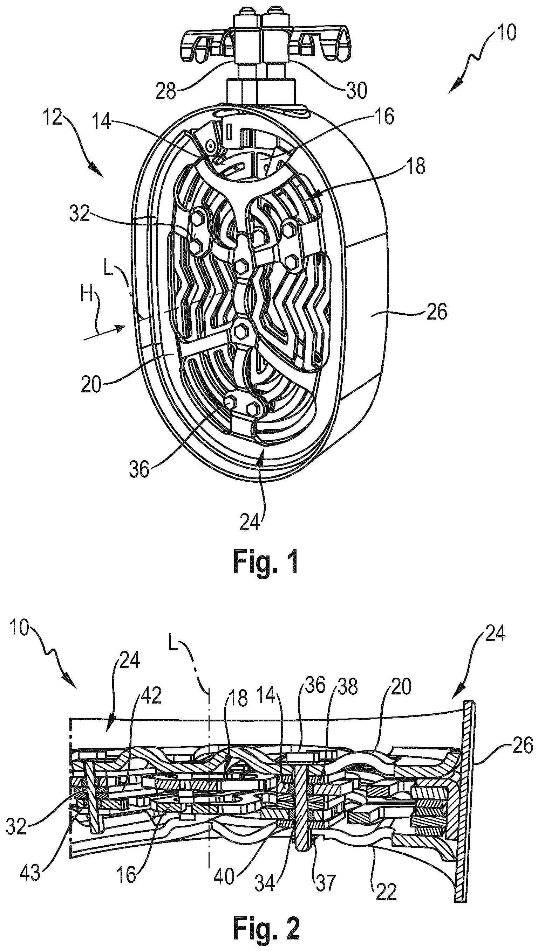

In den Fig. 1 und 2 ist ein Abgasheizer 10 für eine Abgasanlage 12 einer Brennkraftmaschine, beispielsweise an einem Kraftfahrzeug, dargestellt. Der Abgasheizer 10 ist in der Abgasanlage 12 von Abgas in einer Abgas-Hauptströmungsrichtung H durchströmbar und weist zwei in Richtung einer Abgasheizer-Längsachse L aufeinanderfolgend angeordnete und somit von im Wesentlichen in der Abgas-Hauptströmungsrichtung H strömendem Abgas nacheinander umströmbare Heizleiter 14, 16 einer allgemein mit 18 bezeichneten Heizleiteranordnung auf. Die Heizleiter 14, 16 sind im Wesentlichen plattenartig bzw. aus Flachmaterial aufgebaut und können mit ihrer mit einer Mehrzahl von in mäanderartiger Struktur verlaufenden Abschnitten bereitgestellten Struktur durch Heraustrennen aus einem Flachmaterialrohling, insbesondere einem Metallrohling, erzeugt werden.

An den in der Abgasheizer-Längsrichtung L voneinander abgewandt liegenden Seiten der beiden Heizleiter 14, 16 sind im Wesentlichen plattenartig gestaltete Trägerelemente 20, 22 einer allgemein mit 24 bezeichneten Trägeranordnung vorgesehen. An ihrem Außenumfangsbereich sind die plattenartigen Trägerelemente 20, 22 an einem im Wesentlichen zylindrischen Trägergehäuse 26 festgelegt.

Die beiden Heizleiter 14, 16 können zueinander seriell oder parallel geschaltet sein. Zur elektrischen Verbindung mit einer Spannungsquelle sind zwei das Trägergehäuse 26 durchsetzende Anschlusseinheiten 28, 30 vorgesehen, welche in dem von dem Trägergehäuse 26 umgebenen Innenraum mit den Heizleitern 14, 16 elektrisch leitend verbunden sind.

Zum Erhalt eines stabilen Verbundes sind die beiden Trägerelemente 20, 22 und die dazwischen angeordneten, einander unmittelbar benachbart liegenden Heizleiter 14, 16 durch eine Mehrzahl von bolzenartig ausgebildeten Verbindungselementen 32 fest miteinander verbunden. Die Verbindungselemente 32 können beispielsweise als Schraubbolzen mit einem Schaft 34 und einem Kopf 36 ausgebildet sein. Auf den Schaft 34 kann beispielsweise ein Mutterelement 37 aufgeschraubt sein, um den geschichteten Aufbau aus Trägerelementen 20, 22 und Heizleitern 14, 16 zwischen sich einzuspannen. Die Verbindungselemente 32 können beispielsweise mit Stahlmaterial oder einer Nickel-Chrom-Legierung, aufgebaut sein.

Um eine elektrische Isolierung der Heizleiter 14, 16 bezüglich der im Allgemeinen aus Metallmaterial aufgebauten Trägerelemente 20, 22 der Trägeranordnung 24 zu erreichen, ist zwischen dem Heizleiterelement 14 und dem Trägerelement 20 beispielsweise in Zuordnung zu jedem Verbindungselement 32 eine mit elektrisch isolierendem Material, beispielsweise Keramikmaterial, aufgebaute, im Wesentlichen plattenartig ausgebildete und von dem zugeordneten Verbindungselement 32 im Bereich einer darin vorgesehenen Öffnung durchsetzte Trägeranordnung-Abstützeinheit 38 vorgesehen. Gleichmaßen ist beispielsweise in Zuordnung zu jedem Verbindungselement 32 eine zwischen dem Heizleiter 16 und dem Trägerelement 22 angeordnete Trägerelement-Abstützeinheit 40 vorgesehen. Die nachfolgend detaillierter beschriebenen Trägerelement-Abstützeinheiten 38, 40 können beispielweise zueinander im Wesentlichen baugleich sein.

Um die beiden nebeneinander liegenden Heizleiter 14, 16 bezüglich einander elektrisch isoliert abzustützen, ist beispielsweise in Zuordnung zu jedem Verbindungselement 32 eine Heizleiter-Abstützeinheit 42 vorgesehen. Auch jede Heizleiter-Abstützeinheit 42 ist im Wesentlichen plattenartig mit einer oder mehreren Scheiben ausgebildet und mit Keramikmaterial aufgebaut.

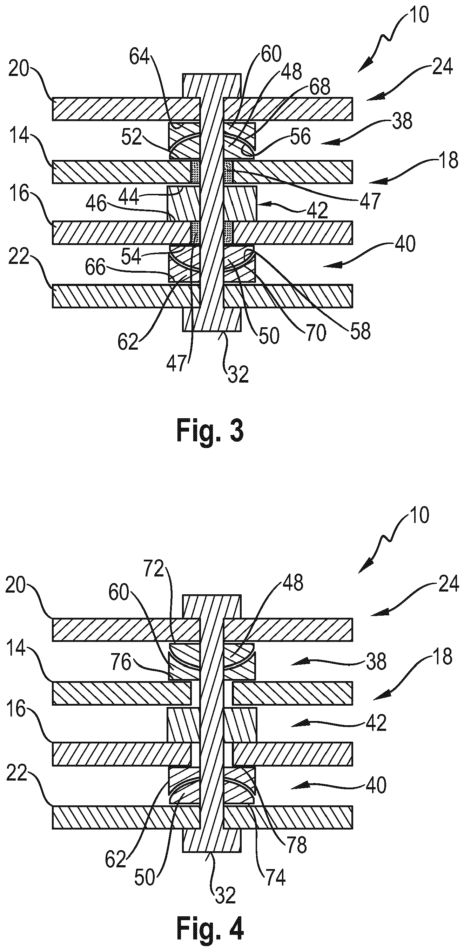

Die Fig. 3 zeigt für eine erfindungsgemäße Ausgestaltung eines Abgasheizers 10 in prinzipartiger Darstellung den Bereich der Verbindung der beiden Trägerelemente 20, 22 und der dazwischen angeordneten Heizleiter 14, 16 vermittels eines Verbindungselements 32. Zwischen den beiden Heizleitern 14, 16 ist die Heizleiter-Abstützeinheit 42 zu erkennen, welche in Zuordnung zu jedem der beiden Heizleiter 14, 16 eine im Wesentlichen ebene, also ungekrümmte Heizleiter-Abstützfläche 44, 46 bereitstellt, so dass ein flächiger Anlagekontakt zwischen den Heizleitern 14, 16 und der mit einer oder mehreren Scheiben aufgebauten Heizleiter-Abstützeinheit 42 erreicht ist.

Dort, wo die Heizleiter 14, 16 von dem Verbindungselement 32 durchsetzt sind, können in die in den Heizleitern 14, 16 gebildeten Öffnungen hülsenartige Isolierelemente 47 eingesetzt werden, um eine definierte Positionierung des Verbindungselements 32 in den in den Heizleitern 14, 16 vorgesehenen Öffnungen zu erreichen.

Jede der beiden in Zuordnung zu dem Verbindungselement 32 vorgesehenen Trägeranordnung-Abstützeinheiten 38, 40 umfasst ein erstes Trägeranordnung-Abstützelement 48, 50. Jedes erste Trägeranordnung-Abstützelement 48, 50 weist zur Abstützung an dem zugeordneten Heizleiter 14, 16 eine im Wesentlichen ebene, ungekrümmte Heizleiter-Abstützfläche 52, 54 auf. An der vom jeweiligen Heizleiter 14 bzw. 16 abgewandten Seite weist jedes erste Trägeranordnung-Abstützelement 48, 50 eine beispielsweise im Wesentlichen sphärisch oder kugelartig konvex gewölbte erste Abstützfläche 56, 58 auf.

Jede Trägeranordnung-Abstützeinheit 38, 40 umfasst ferner ein zweites Trägeranordnung-Abstützelement 60, 62. In Zuordnung zu den Trägerelementen 20, 22 weisen die zweiten Trägeranordnung-Abstützelemente 60, 62 jeweils eine im Wesentlichen ebene, ungekrümmte Trägeranordnung-Abstützfläche 64, 66 auf. An ihren vom zugeordneten Trägerelement 20 bzw. 22 abgewandten Seiten weisen die zweiten Trägeranordnung-Abstützelemente 60, 62 jeweils eine, beispielsweise kugelartig konkav gewölbte zweite Abstützfläche 68, 70 auf, welche mit den zugeordneten konvex gewölbten ersten Abstützflächen 56, 58 nach Art eines Kugelgelenks zusammenwirken und somit eine Bewegbarkeit der Trägerelemente 20, 22 bezüglich der über die Trägeranordnung-Abstützeinheiten 38, 40 bezüglich diesen abgestützten Heizleiter 14, 16 ermöglichen. Dies ist von besonderem Vorteil, da bei der in Fig. 3 dargestellten Ausgestaltungsvariante vorzugsweise die beiden Trägeranordnung-Abstützelemente 48, 50, 60, 62 der Trägeranordnung-Abstützeinheiten 38, 40 mit elektrisch isolierendem Keramikmaterial aufgebaut sind. Im Betrieb bzw. auch im Herstellungsprozess auftretende Biegebelastungen und dadurch hervorgerufene Verformungen können somit durch eine Bewegbarkeit innerhalb der Trägeranordnung-Abstützeinheiten 38, 40 aufgefangen werden und nicht zu Beschädigungen der Trägeranordnung-Abstützelemente 48, 50, 60, 62 führen.

Zu dieser Relativbewegbarkeit trägt insbesondere auch bei, dass ein jeweiliges Verbindungselement 32 die Trägerelement-Abstützeinheiten 38, 40 bzw. deren Trägeranordnung-Abstützelemente 48, 50, 60, 62 im jeweiligen Scheitelbereich der daran vorgesehenen konvex bzw. konkav gewölbten Abstützflächen 56, 58 bzw. 68, 70 mit Bewegungsspiel durchsetzt.

Bei der in Fig. 4 dargestellten Ausgestaltungsart ist die Zuordnung der ersten und zweiten Trägeranordnung-Abstützelemente zu den Trägerelementen 20, 22 und den Heizleitern 14, 16 vertauscht. Die mit konvex gewölbten ersten Abstützflächen 56, 58 ausgebildeten ersten Trägeranordnung-Abstützelemente 48, 50 sind nunmehr an den Trägerelementen 20, 22 abgestützt, während die mit konkav gewölbten zweiten Abstützflächen 68, 70 ausgebildeten zweiten Trägeranordnung-Abstützelemente 60, 62 in Zuordnung zu den Heizleitern 14, 16 angeordnet sind. Bei dieser Ausgestaltung stellen somit die ersten Trägeranordnung-Abstützelemente 48, 50 an ihren von den jeweiligen ersten Abstützflächen 56, 58 abgewandten Seiten im Wesentlichen ebene bzw. ungekrümmte Trägerelement-Abstützflächen 72, 74 bereit, während die an den Heizleitern 14, 16 abgestützten zweiten Trägeranordnung-Abstützelemente 60, 62 an ihren von den jeweiligen zweiten Trägeranordnung-Abstützflächen 68,70 abgewandten Seiten jeweilige im Wesentlichen ungekrümmte, ebene Heizleiter-Abstützflächen 76,78 bereitstellen.

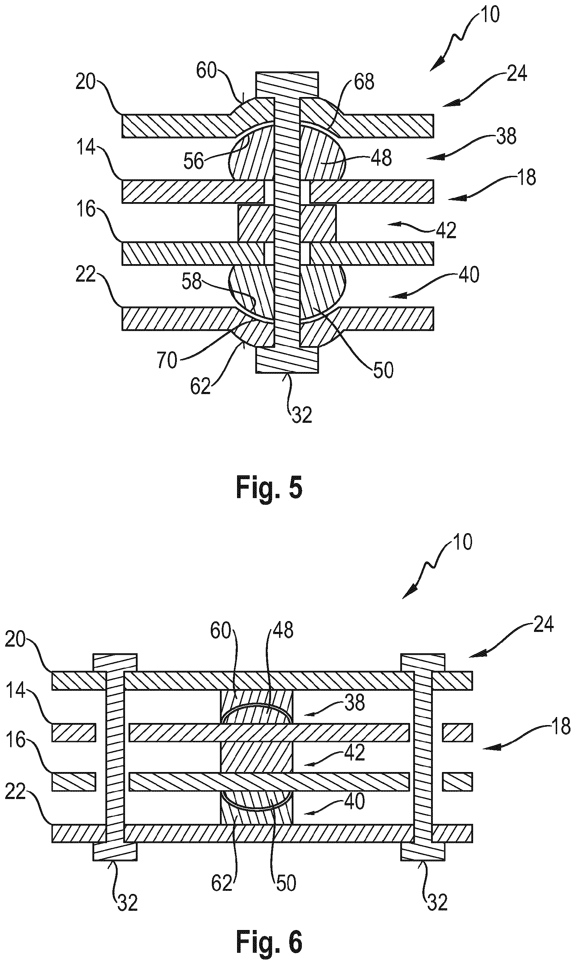

Eine weitere Variante ist in Fig. 5 dargestellt. Bei dieser Variante ist in Zuordnung zu jeder Trägeranordnung-Abstützeinheit 38, 40 ein jeweiliges eine konkav gewölbte zweite Abstützfläche 68, 70 bereitstellendes Trägeranordnung-Abstützelement 60, 62 in ein jeweiliges Trägerelement 20 bzw. 22 integriert bzw. durch dieses bereitgestellt. Da die Trägerelemente 20, 22 aus Metallmaterial, beispielsweise Metallblech oder dergleichen, aufgebaut sind, umfasst bei dieser Ausgestaltung, bei welcher die Trägeranordnung-Abstützeinheiten 38, 40 wiederum von einem Verbindungselement 32 im Scheitelbereich der jeweiligen konvex bzw. konkav gewölbten Abstützflächen durchsetzt sind, nur ein einziges mit elektrisch isolierendem Material, beispielsweise Keramikmaterial, aufgebautes und in diesem Ausgestaltungsbeispiel die konvex gewölbte erste Abstützfläche 56, 58 bereitstellendes erstes Trägeranordnung-Abstützelement 48, 50.

In Fig. 6 ist eine Ausgestaltung gezeigt, bei welcher die in Verbindung mit einer Heizleiter-Abstützeinheit 42 einen in Richtung der Abgasheizer-Längsachse durchgehenden Stapel von Abstützeinheiten bereitstellenden Trägeranordnung-Abstützeinheiten 38, 40 und Heizleiter-Abstützeinheit 42 nicht im Bereich jeweils eines Verbindungselements 32 angeordnet sind, sondern in einem Bereich, der zwischen zwei bzw. mehreren Verbindungselementen 32 liegt. Dadurch wird eine größere Freiheit hinsichtlich der Positionierung der verschiedenen Abstützeinheiten ermöglicht. Eine Beschränkung auf die Position der Abstützelemente ist nicht erforderlich.

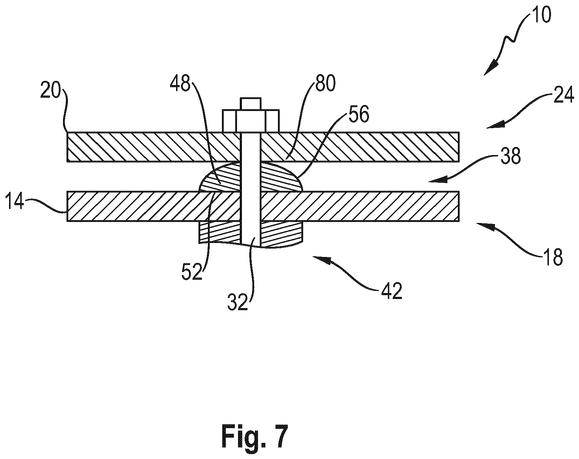

Eine nicht erfindungsgemäße Ausgestaltungsart einer Trägeranordnung-Abstützeinheit ist in Fig. 7 beispielhaft anhand der Trägeranordnung-Abstützeinheit 38 veranschaulicht. Die Trägeranordnung-Abstützeinheit 38 umfasst das mit der konvex gewölbten ersten Abstützfläche 56 und der im Wesentlichen ebenen bzw. ungekrümmten Heizleiter-Abstützfläche 52 aus elektrisch isolierendem Material aufgebaute erste Trägeranordnung-Abstützelement 48. Auch bei dieser Ausgestaltungsart ist das Gegenstück, also das zweite Trägeranordnung-Abstützelement 50, durch die Trägeranordnung 24 bzw. das Trägerelement 20 derselben bereitgestellt. Das Trägerelement 20 weist in diesem Falle jedoch keine gewölbte Abstützfläche, sondern eine im Wesentlichen ungekrümmte zweite Abstützfläche 80 auf, an welcher die konvex gewölbte erste Abstützfläche 56 anliegt und bei Auftreten von Relativbewegungen abrollen kann.

Das erste Trägeranordnung-Abstützelement 48 könnte auch bei dieser Ausgestaltungsart so positioniert sein, dass es mit seiner konvex gewölbten ersten Abstützfläche 56 am Heizleiter 14 anliegt und mit seiner im Wesentlichen ungekrümmten Rückseite am Trägerelement 20 abgestützt ist. Es ist selbstverständlich, dass auch bei dieser Ausgestaltungsart in Zuordnung zu dem Heizleiter 16 bzw. dem Trägerelement 22 die bzw. jede zweite Trägeranordnung-Abstützeinheit 50 in dieser Weise ausgebildet sein könnte.

Es ist abschließend darauf hinzuweisen, dass selbstverständlich verschiedene Ausgestaltungsvarianten miteinander kombiniert werden können. So könnte beispielsweise zwischen dem Trägerelement 20 und dem Heizleiter 14 die in Fig. 3 dargestellte Trägeranordnung-Abstützeinheit 38 angeordnet sein, während zwischen dem Heizleiter 16 und dem Trägerelement 22 die in Fig. 4 dargestellte Trägeranordnung-Abstützeinheit 40 vorgesehen sein könnte. Auch könnten in Zuordnung zu verschiedenen Verbindungselementen 32 verschiedene Arten der Trägeranordnung-Abstützeinheiten vorgesehen sein. Bei Integration eines Trägeranordnung-Abstützelements in ein Trägerelement 20 bzw. 22 könnte dieses Trägeranordnung-Abstützelement eine konvex gewölbte erste Abstützfläche bereitstellen, während an dem anderen dann mit elektrisch isolierendem Material aufgebauten Trägeranordnung-Abstützelement eine jeweilige konkav gewölbte zweite Abstützfläche bereitgestellt sein könnte.

## Patentansprüche

1. Abgasheizer für eine Abgasanlage einer Brennkraftmaschine, umfassend eine Trägeranordnung (24) und eine an der Trägeranordnung (24) getragene Heizleiteranordnung (18) mit wenigstens einem stromdurchflossenen Heizleiter (14, 16), wobei wenigstens ein Heizleiter (14, 16) bezüglich der Trägeranordnung (24) durch wenigstens eine Trägeranordnung-Abstützeinheit (38, 40) elektrisch isoliert getragen ist, wobei wenigstens eine Trägeranordnung-Abstützeinheit (38, 40) wenigstens ein Trägeranordnung-Abstützelement (48, 50, 60, 62) mit einer gewölbten Abstützfläche (56, 58, 68, 70) umfasst, **dadurch gekennzeichnet, dass** wenigstens eine Trägeranordnung-Abstützeinheit (38, 40) ein erstes Trägeranordnung-Abstützelement (48, 50) mit einer konvex gewölbten ersten Abstützfläche (56, 58) und ein zweites Trägeranordnung-Abstützelement (60, 62) mit einer an der ersten Abstützfläche (56, 58) abgestützten, konkav gewölbten zweiten Abstützfläche (68, 70) umfasst.

2. Abgasheizer nach Anspruch 1, **dadurch gekennzeichnet, dass** jede Trägeranordnung-Abstützeinheit (38, 40) ein erstes Trägeranordnung-Abstützelement (48, 50) mit einer konvex gewölbten ersten Abstützfläche (56, 58) und ein zweites Trägeranordnung-Abstützelement (60, 62) mit einer an der ersten Abstützfläche (56, 58) abgestützten, konkav gewölbten zweiten Abstützfläche (68, 70) umfasst.

3. Abgasheizer nach Anspruch 1 oder 2, **dadurch gekennzeichnet, dass** bei wenigstens einer, vorzugsweise jeder Trägeranordnung-Abstützeinheit (38, 40) ein Trägeranordnung-Abstützelement (48, 50, 60, 62) eine im Wesentlichen ungekrümmte Heizleiter-Abstützfläche (52, 54; 76, 78) aufweist.

4. Abgasheizer nach einem der Ansprüche 1-3, **dadurch gekennzeichnet, dass** bei wenigstens einer, vorzugsweise jeder Trägeranordnung-Abstützeinheit (38, 40) ein Trägeranordnung-Abstützelement (48, 50, 60, 62) eine im Wesentlichen ungekrümmte Trägeranordnung-Abstützfläche (64, 66; 72, 74) aufweist.

5. Abgasheizer nach einem der Ansprüche 1-4, **dadurch gekennzeichnet, dass** bei wenigstens einer, vorzugsweise jeder Trägeranordnung-Abstützeinheit (38, 40) wenigstens ein, vorzugsweise jedes Trägeranordnung-Abstützelement (48, 50, 60, 62) mit elektrisch isolierendem Material aufgebaut ist.

6. Abgasheizer nach einem der Ansprüche 1-5, **dadurch gekennzeichnet, dass** bei wenigstens einer, vorzugsweise jeder Trägeranordnung-Abstützeinheit (38, 40) ein Trägeranordnung-Abstützelement (50) durch die Trägeranordnung (24) bereitgestellt ist.

7. Abgasheizer nach einem der Ansprüche 1-6, **dadurch gekennzeichnet, dass** die Trägeranordnung (24) zwei die Heizleiteranordnung (18) in Richtung einer Abgasheizer-Längsachse (L) zwischen sich aufnehmende Trägerelemente (20, 22) umfasst, wobei die Heizleiteranordnung (18) bezüglich jedes Trägerelements (20, 22) vermittels wenigstens einer Trägeranordnung-Abstützeinheit (38, 40) abgestützt ist.

8. Abgasheizer nach Anspruch 6 und Anspruch 7, **dadurch gekennzeichnet, dass** bei wenigstens einer, vorzugsweise jeder Trägeranordnung-Abstützeinheit (38, 40) ein Trägeranordnung-Abstützelement (50) durch ein Trägerelement (20, 22) bereitgestellt ist.

9. Abgasheizer nach Anspruch 7 oder 8, **dadurch gekennzeichnet, dass** die Heizleiteranordnung (18) wenigstens zwei in Richtung der Abgasheizer-Längsachse (L) aufeinanderfolgend angeordnete Heizleiter (14, 16) umfasst, wobei ein erster der Heizleiter (14, 16) vermittels wenigstens einer Trägeranordnung-Abstützeinheit (38) bezüglich eines der Trägerelemente (20, 22) abgestützt ist und ein zweiter der Heizleiter (14, 16) vermittels wenigstens einer Trägeranordnung-Abstützeinheit (40) bezüglich des anderen der Trägerelemente (20, 22) abgestützt ist, und wobei zwischen einander in Richtung der Abgasheizer-Längsachse (L) unmittelbar benachbarten Heizleitern (14, 16) wenigstens eine Heizleiter-Abstützeinheit (42) angeordnet ist.

10. Abgasheizer nach Anspruch 9, **dadurch gekennzeichnet, dass** wenigstens eine, vorzugsweise jede Heizleiter-Abstützeinheit (42) wenigstens ein mit elektrisch isolierendem Material aufgebautes Heizleiter-Abstützelement umfasst oder/und in Zuordnung zu jedem daran abgestürzten Heizleiter (14, 16) eine im Wesentlichen ebene Heizleiter-Abstützfläche (44, 46) umfasst.

11. Abgasheizer nach einem der Ansprüche 1-10, **dadurch gekennzeichnet, dass** die Heizleiteranordnung (18) durch wenigstens ein Verbindungselement (32), vorzugsweise eine Mehrzahl von Verbindungselementen (32), mit der Trägeranordnung (24) verbunden ist.

12. Abgasheizer nach Anspruch 11, **dadurch gekennzeichnet, dass** wenigstens eine, vorzugsweise jede Trägeranordnung-Abstützeinheit (38, 40) von einem Verbindungselement (32) durchsetzt ist.

13. Abgasheizer nach Anspruch 11 oder 12, **dadurch gekennzeichnet, dass** wenigstens eine, vorzugsweise jede Trägeranordnung-Abstützeinheit (38, 40) nicht von einem Verbindungselement (32) durchsetzt ist.

14. Abgasanlage für eine Brennkraftmaschine, umfassend wenigstens einen Abgasheiz (10) nach einem der vorangehenden Ansprüche.

## Claims

1. An exhaust gas heater for an exhaust gas system of an internal combustion engine, comprising a carrier arrangement (24) and a heat conductor arrangement (18) which is carried on the carrier arrangement (24) and which has at least one heat conductor (14, 16) through which current flows, wherein at least one heat conductor (14, 16) is carried with respect to the carrier arrangement (24) by means of at least one carrier arrangement support unit (38, 40) in an electrically insulated manner, wherein at least one carrier arrangement support unit (38, 40) comprises at least one carrier arrangement support element (48, 50, 60, 62) having a curved support face (56, 58, 68, 70), **characterized in that** at least one carrier arrangement support unit (38, 40) comprises a first carrier arrangement support element (48, 50) having a convex-curved first support face (56, 58) and a second carrier arrangement support element (60, 62) having a second support face (68, 70) which is supported on the first support face (56, 58) and which is curved in a concave manner.

2. The exhaust gas heater as claimed in claim 1, **characterized in that** each carrier arrangement support unit (38, 40) comprises a first carrier arrangement support element (48, 50) having a convex-curved first support face (56, 58) and a second carrier arrangement support element (60, 62) having a second support face (68, 70) which is supported on the first support face (56, 58) and which is curved in a concave manner.

3. The exhaust gas heater as claimed in claim 1 or 2, **characterized in that** in at least one, preferably each carrier arrangement support unit (38, 40), a carrier arrangement support element (48, 50, 60, 62) has a substantially non-curved heat conductor support face (52, 54; 76, 78).

4. The exhaust gas heater as claimed in one of claims 1 to 3, **characterized in that** in at least one, preferably each carrier arrangement support unit (38, 40), a carrier arrangement support element (48, 50, 60, 62) has a substantially non-curved carrier arrangement support face (64, 66; 72, 74).

5. The exhaust gas heater as claimed in one of claims 1 to 4, **characterized in that** in at least one, preferably each carrier arrangement support unit (38, 40), at least one, preferably each carrier arrangement support element (48, 50, 60, 62) is made from electrically insulating material.

6. The exhaust gas heater as claimed in one of claims 1 to 5, **characterized in that** in at least one, preferably each carrier arrangement support unit (38, 40), a carrier arrangement support element (50) is provided by the carrier arrangement (24).

7. The exhaust gas heater as claimed in one of claims 1 to 6, **characterized in that** the carrier arrangement (24) comprises two carrier elements (20, 22) which receive the heat conductor arrangement (18) between them in the direction of an exhaust gas heater longitudinal axis (L), wherein the heat conductor arrangement (18) is supported with respect to each carrier element (20, 22) by means of at least one carrier arrangement support unit (38, 40).

8. The exhaust gas heater as claimed in claim 6 and claim 7, **characterized in that** in at least one, preferably each carrier arrangement support unit (38, 40), a carrier arrangement support element (50) is provided by a carrier element (20, 22).

9. The exhaust gas heater as claimed in claim 7 or 8, **characterized in that** the heat conductor arrangement (18) comprises at least two heat conductors (14, 16) which are arranged successively in the direction of the exhaust gas heater longitudinal axis (L), wherein a first one of the heat conductors (14, 16) is supported by means of at least one carrier arrangement support unit (38) with respect to one of the carrier elements (20, 22) and a second one of the heat conductors (14,16) is supported by means of at least one carrier arrangement support unit (40) with respect to the other of the carrier elements (20, 22), and wherein at least one heat conductor support unit (42) is arranged between heat conductors (14, 16) which are directly adjacent to each other in the direction of the exhaust gas heater longitudinal axis (L).

10. The exhaust gas heater as claimed in claim 9, **characterized in that** at least one, preferably each heat conductor support unit (42) comprises at least one heat conductor support element which is made from electrically insulating material and/or which comprises in association with each heat conductor (14, 16) which is supported thereon a substantially planar heat conductor support face (44, 46).

11. The exhaust gas heater as claimed in one of claims 1 to 10, **characterized in that** the heat conductor arrangement (18) is connected to the carrier arrangement (24) by means of at least one connection element (32), preferably a plurality of connection elements (32).

12. The exhaust gas heater as claimed in claim 11, **characterized in that** a connection element (32) extends through at least one, preferably each carrier arrangement support unit (38, 40).

13. The exhaust gas heater as claimed in claim 11 or 12, **characterized in that** a connection element (32) does not extend through at least one, preferably each carrier arrangement support unit (38, 40).

14. An exhaust gas system for an internal combustion engine, comprising at least one exhaust gas heater (10) as claimed in one of the preceding claims.

## Revendications

1. Un réchauffeur de gaz d'échappement pour un système de gaz d'échappement d'un moteur à combustion interne, comprenant un agencement porteur (24) et un agencement de conducteur de chaleur (18) porté par l'agencement porteur (24) avec au moins un conducteur de chaleur (14, 16) à travers lequel le courant circule, dans lequel au moins un conducteur de chaleur (14, 16) est porté par rapport à l'agencement porteur (24) au moyen d'au moins une unité de support d'agencement porteur (38, 40) d'une manière électriquement isolée, dans lequel au moins une unité de support d'agencement porteur (38, 40) comprend au moins un élément de support d'agencement porteur (48, 50, 60, 62) avec une face de support courbée (56, 58, 68, 70), **caractérisé en ce qu'**au moins une unité de support d'agencement porteur (38, 40) comprend un premier élément de support d'agencement porteur (48, 50) avec une première face de support courbée convexe (56, 58) et un deuxième élément de support d'agencement porteur (60, 62) avec une deuxième face de support (68, 70) supporté à la première face de support (56, 58) et courbée de manière concave.

2. Le réchauffeur de gaz d'échappement selon la revendication 1, **caractérisé en ce que** chaque unité de support d'agencement porteur (38, 40) comprend un premier élément de support d'agencement porteur (48, 50) avec une première face de support courbée convexe (56, 58) et un deuxième élément de support d'agencement porteur (60, 62) avec une deuxième face de support (68, 70) supportée à la première face de support (56, 58) et courbée de manière concave.

3. Le réchauffeur de gaz d'échappement selon la revendication 1 ou 2, **caractérisé en ce que** dans au moins une, de préférence chaque unité de support d'agencement porteur (38, 40), un élément de support d'agencement porteur (48, 50, 60, 62) présente une face de support de conducteur de chaleur sensiblement non courbée (52, 54 ; 76, 78).

4. Le réchauffeur de gaz d'échappement selon l'une des revendications 1 à 3, **caractérisé en ce que** dans au moins une, de préférence chaque unité de support d'agencement porteur (38, 40), un élément de support d'agencement porteur (48, 50, 60, 62) présente une face de support d'agencement porteur sensiblement non courbée (64, 66 ; 72, 74).

5. Le réchauffeur de gaz d'échappement selon l'une des revendications 1 à 4, **caractérisé en ce que** dans au moins une, de préférence chaque unité de support d'agencement porteur (38, 40), au moins un, de préférence chaque élément de support d'agencement porteur (48, 50, 60, 62) est fabriqué à partir d'un matériau électriquement isolant.

6. Le réchauffeur de gaz d'échappement selon l'une des revendications 1 à 5, **caractérisé en ce que** dans au moins une, de préférence chaque unité de support d'agencement porteur (38, 40), un élément de support d'agencement porteur (50) est fourni par l'agencement porteur (24).

7. Le réchauffeur de gaz d'échappement selon l'une des revendications 1 à 6, **caractérisé en ce que** l'agencement porteur (24) comprend deux éléments de support (20, 22) qui reçoivent l'agencement de conducteur de chaleur (18) entre eux dans la direction d'un axe longitudinal de réchauffeur de gaz d'échappement (L), dans lequel l'agencement de conducteur de chaleur (18) est supporté par rapport à chaque élément de support (20, 22) au moyen d'au moins une unité de support d'agencement porteur (38, 40).

8. Le réchauffeur de gaz d'échappement selon la revendication 6 et la revendication 7, **caractérisé en ce que** dans au moins une, de préférence chaque unité de support d'agencement porteur (38, 40), un élément de support d'agencement porteur (50) est fourni par un élément de support (20, 22).

9. Le réchauffeur de gaz d'échappement selon la revendication 7 ou 8, **caractérisé en ce que** l'agencement de conducteur de chaleur (18) comprend au moins deux conducteurs de chaleur (14, 16) qui sont disposés successivement dans la direction de l'axe longitudinal du réchauffeur de gaz d'échappement (L), dans lequel un premier des conducteurs de chaleur (14, 16) est supporté au moyen d'au moins une unité de support d'agencement porteur (38) par rapport à l'un des éléments de support (20, 22) et un deuxième des conducteurs de chaleur (14, 16) est supporté au moyen d'au moins une unité de support d'agencement porteur (40) par rapport à l'autre des éléments de support (20, 22), et dans lequel au moins une unité de support de conducteur de chaleur (42) est disposée entre les conducteurs de chaleur (14, 16) qui sont directement adjacents les uns aux autres dans la direction de l'axe longitudinal du réchauffeur de gaz d'échappement (L).

10. Le réchauffeur de gaz d'échappement selon la revendication 9, **caractérisé en ce qu'**au moins une, de préférence chaque unité de support de conducteur de chaleur (42) comprend au moins un élément de support de conducteur de chaleur qui est fabriqué à partir d'un matériau électriquement isolant et/ou qui comprend en association avec chaque conducteur de chaleur (14, 16) qui est supporté sur celui-ci une face de support de conducteur de chaleur sensiblement plane (44, 46).

11. Le réchauffeur des gaz d'échappement selon l'une des revendications 1 à 10, **caractérisé en ce que** l'agencement de conducteur de chaleur (18) est relié à l'agencement porteur (24) au moyen d'au moins un élément de connexion (32), de préférence une pluralité d'éléments de connexion (32).

12. Le réchauffeur des gaz d'échappement selon la revendication 11, **caractérisé en ce qu'**un élément de connexion (32) s'étend à travers au moins une, de préférence chaque unité de support d'agencement porteur (38, 40).

13. Le réchauffeur de gaz d'échappement selon la revendication 11 ou 12, **caractérisé en ce qu'**un élément de connexion (32) ne s'étend pas à travers au moins une, de préférence chaque unité de support d'agencement porteur (38, 40).

14. Un système de gaz d'échappement pour un moteur à combustion interne, comprenant au moins un réchauffeur de gaz d'échappement (10) selon l'une des revendications précédentes.
